# EUROPEAN PATENT APPLICATION

(11) **EP 4 513 967 A1**
(43) Date of publication of application: **26.02.2025**
(21) Application number: 23791173.0
(22) Date of filing: 17.04.2023
(51) Int. Cl.: H04W 36/34

(54) **HANDOVER COMMAND TRIGGERING METHOD, AND DEVICE AND NETWORK-SIDE DEVICE**

(30) Priority: 20.04.2022 CN 202210416023
(71) Applicant: Vivo Mobile Communication Co., Ltd., Dongguan, Guangdong 523863 (CN)
(72) Inventor: SONG, Erhao, Dongguan, Guangdong 523863 (CN); BAO, Wei, Dongguan, Guangdong 523863 (CN)
(74) Representative: Cabinet Beaumont
(86) International application number: PCT/CN2023/088633
(87) International publication number: WO 2023/202518

(57) **Abstract**

This application discloses a handover command triggering method, a device, and a network-side device, pertaining to the field of mobile communication. The handover command triggering method in embodiments of this application includes: receiving, by a first device, a first message from a second device, where the first message carries a first command; and determining, by the first device based on whether a terminal is executing a handover corresponding to a second command, whether to execute the first command or whether to send a third message to the terminal; where the second command includes a layer 1 or layer 2 handover command triggered by the first device; the third message carries the first command; and the first command includes at least one of the following: a layer 3 handover command; an inter-system handover command; a secondary cell addition command; a primary secondary cell addition or modification command; and a redirection command.

## Description

### CROSS-REFERENCE TO RELATED APPLICATIONS

The present invention claims priority to Chinese Patent Application No. 202210416023.5, filed with the China National Intellectual Property Administration on April 20, 2022 and entitled "HANDOVER COMMAND TRIGGERING METHOD, DEVICE, AND NETWORK-SIDE DEVICE", which is incorporated herein by reference in its entirety.

### TECHNICAL FIELD

This application pertains to the field of mobile communication technologies, and specifically relates to a handover command triggering method, a device, and a network-side device.

### BACKGROUND

In a new radio (New Radio) access network, a base station such as a gNB is divided into a centralized unit (Centralized Unit, CU) and a distributed unit (Distributed Unit, DU), which are connected through an F1 interface. One gNB includes only one CU and one or more DUs, and one DU corresponds to one or more cells (Cell). The CU includes a packet data convergence protocol (Packet Data Convergence Protocol, PDCP) layer and a protocol stack below, for example, a PDCP layer and a radio resource control (Radio Resource Control, RRC) layer. The DU includes a protocol stack below the PDCP layer, such as the radio link control (Radio link Control, RRC) layer, a medium access control (Medium Access Control, MAC) layer, and a physical (Physical, PHY) layer.

Layer 1 (L1) or layer 2 (L2) handover is determined by a DU based on an L1 measurement result, and layer 3 (L3) handover is determined by the CU based on an L3 measurement result. Due to different entities for handover judgment, the two types of handover may be triggered simultaneously or within a short time interval. For example, if a terminal (also referred to as user equipment (User Equipment, UE)) performs an L1/2 handover first and then an L3 handover according to a received handover command, because the L3 handover command is configured for a source cell and the UE has already handed over to a target cell, the UE may make an error when applying the L3 handover configuration of the source cell.

It can be seen that simultaneous triggering of the L1/2 handover and the L3 handover may cause the terminal to execute a handover command incorrectly.

### SUMMARY

Embodiments of this application provide a handover command triggering method, a device, and a network-side device, which can resolve the problem that simultaneous triggering of an L 1/2 handover and an L3 handover may cause a terminal to execute a handover command incorrectly.

According to a first aspect, a handover command triggering method is provided, applied to a first device, and the method includes: receiving, by a first device, a first message from a second device, where the first message carries a first command; and determining, by the first device based on whether a terminal is executing a handover corresponding to a second command, whether to execute the first command or whether to send a third message to the terminal; where the second command includes a layer 1 or layer 2 handover command triggered by the first device; the third message carries the first command; and the first command includes at least one of the following: a layer 3 handover command; an inter-system handover command; a secondary cell addition command; a primary secondary cell addition or modification command; and a redirection command.

According to a second aspect, a handover command triggering apparatus is provided, including: a transceiver module, configured to receive a first message from a second device, where the first message carries a first command; and an execution module, configured to determine, based on whether a terminal is executing a handover corresponding to a second command, whether to execute the first command or whether to send a third message to the terminal; where the second command includes a layer 1 or layer 2 handover command triggered by the handover command triggering apparatus; the third message carries the first command; and the first command includes at least one of the following: a layer 3 handover command; an inter-system handover command; a secondary cell addition command; a primary secondary cell addition or modification command; and a redirection command.

According to a third aspect, a handover command triggering method is provided, applied to a first device, and the method includes: receiving, by a first device, a first message from a second device, where the first message carries a first command; executing, by the first device, the first command or sending, by the first device, a third message to the terminal based on the first message; and obtaining, by the first device, a second command, and skipping, by the first device, sending a second message to the terminal in a case that a second condition is met; where the second message carries the second command, and the second command includes a layer 1 or layer 2 handover command triggered by the first device; and the third message carries the first command and the first command includes at least one of the following: a layer 3 handover command; an inter-system handover command; a secondary cell addition command; a primary secondary cell addition or modification command; and a redirection command.

According to a fourth aspect, a handover command triggering apparatus is provided, including: a transceiver module, configured to receive a first message from a second device, where the first message carries a first command; and an execution module, configured to execute the first command or send a third message to the terminal based on the first message; where the execution module is further configured to obtain a second command, and skip sending a second message to the terminal in a case that a second condition is met; where the second message carries the second command, and the second command includes a layer 1 or layer 2 handover command triggered by the first device; and the third message carries the first command and the first command includes at least one of the following: a layer 3 handover command; an inter-system handover command; a secondary cell addition command; a primary secondary cell addition or modification command; and a redirection command.

According to a fifth aspect, a handover command triggering method is provided, applied to a second device, and the method includes: sending, by a second device, a first message to the first device, where the first message carries a first command; and receiving, by the second device, a fourth message from the first device, where the fourth message is used to indicate that the first device has not executed the first command or has not sent the third message to the terminal; where the third message carries the first command and the first command includes at least one of the following: a layer 3 handover command; an inter-system handover command; a secondary cell addition command; a primary secondary cell addition or modification command; and a redirection command.

According to a sixth aspect, a handover command triggering apparatus is provided, including: a sending module, configured to send a first message to the first device, where the first message carries a first command; and a receiving module, configured to receive a fourth message from the first device, where the fourth message is used to indicate that the first device has not executed the first command or has not sent the third message to the terminal; where the third message carries the first command and the first command includes at least one of the following: a layer 3 handover command; an inter-system handover command; a secondary cell addition command; a primary secondary cell addition or modification command; and a redirection command.

According to a seventh aspect, a network-side device is provided, where the network-side device includes a processor and a memory, and a program or instruction executable by the processor is stored in the memory. When the program or instruction is executed by the processor, the steps of the method according to the third aspect are implemented.

According to an eighth aspect, a network-side device is provided, including a processor and a communication interface, where the processor is configured to: based on whether a terminal is executing a handover corresponding to a second command, determine whether to execute a first command or send a third message to the terminal, and the communication interface is configured to receive the first message from a second device.

According to a ninth aspect, a network-side device is provided, including a processor and a communication interface, where the processor is configured to: execute a first command or send a third message to the terminal based on a first message, and skip sending a second message to the terminal in a case that a second condition is met; and the communication interface is configured to receive a first message from a second device to obtain a second command.

According to a tenth aspect, another network-side device is provided, where the network-side device includes a processor and a memory, and a program or instruction executable by the processor is stored in the memory. When the program or instruction is executed by the processor, the steps of the method according to the fifth aspect are implemented.

According to an eleventh aspect, another network-side device is provided, including a communication interface, where the communication interface is configured to send a first message to the first device and receive a fourth message from the first device, where the fourth message is used to indicate that the first device has not executed a first command or has not sent a third message to a terminal.

According to a twelfth aspect, a handover command triggering system is provided, including a terminal and a network-side device, where the network-side device may be configured to execute the steps of the handover command triggering method according to the first aspect, the third aspect, or the fifth aspect.

According to a thirteenth aspect, a readable storage medium is provided, where a program or an instruction is stored in the readable storage medium; and when the program or instruction is executed by a processor, the steps of the method according to the first aspect are implemented, or the steps of the method according to the third aspect are implemented, or the steps of the method according to the fifth aspect are implemented.

According to a fourteenth aspect, a chip is provided, where the chip includes a processor and a communication interface, the communication interface is coupled to the processor, and the processor is configured to run a program or an instruction to implement the method according to the first aspect, or implement the method according to the third aspect, or implement the method according to the fifth aspect.

According to a fifteenth aspect, a computer program/program product is provided, where the computer program/program product is stored in a storage medium, and the computer program/program product is executed by at least one processor to implement the steps of the handover command triggering method according to the first aspect, or the steps of the handover command triggering method according to the third aspect, or the steps of the handover command triggering method according to the fifth aspect.

In the embodiments of this application, the first device receives the first message from the second device, where the first message carries the first command. Based on whether the terminal is executing the handover corresponding to the second command, the first device determines whether to execute the first command or send the third message to the terminal. In this way, when the L1/2 handover and L3 handover are triggered simultaneously, it is clear how to execute the handover, so that the handover process can proceed smoothly.

### BRIEF DESCRIPTION OF DRAWINGS

FIG. 1 is a schematic structural diagram of a wireless communication system to which the embodiments of this application are applicable;
FIG. 2 is a schematic flowchart of a handover command triggering method according to an embodiment of this application;
FIG. 3 is a schematic flowchart of another handover command triggering method according to an embodiment of this application;
FIG. 4 is a schematic flowchart of another handover command triggering method according to an embodiment of this application;
FIG. 5 is a schematic structural diagram of a handover command triggering apparatus according to an embodiment of this application;
FIG. 6 is a schematic flowchart of another handover command triggering method according to an embodiment of this application;
FIG. 7 is a schematic structural diagram of another handover command triggering apparatus according to an embodiment of this application;
FIG. 8 is a schematic flowchart of another handover command triggering method according to an embodiment of this application;
FIG. 9 is a schematic structural diagram of another handover command triggering apparatus according to an embodiment of this application;
FIG. 10 is a schematic structural diagram of a communication device according to an embodiment of this application; and
FIG. 11 is a schematic structural diagram of a network-side device for implementing the embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

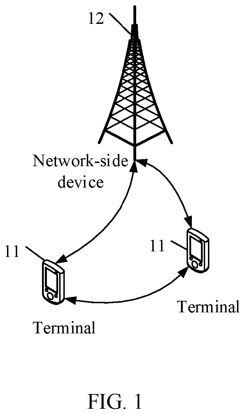

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

The following describes in detail a handover command triggering method, a device, and a network-side device provided in the embodiments of this application by using some embodiments and application scenarios thereof with reference to the accompanying drawings.

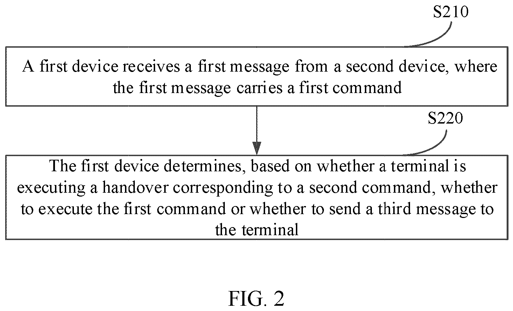

As shown in FIG. 2, an embodiment of this application provides a handover command triggering method, and an execution subject of the method is a first device. The first device may be an access network device, in other words, the method can be executed by software or hardware installed in the first device. The method includes the following steps:
S210: The first device receives a first message from a second device, where the first message carries a first command.

It should be understood that the first device and the second device are both access network devices. In an implementation, the first device may be a DU of the access network device and the second device is a CU of the access network device. The first device may determine, based on an L1 measurement result, whether to perform an L1 or L2 handover, and the second device may determine, based on an L3 measurement result, whether to perform an L3 handover.

In a case that the first device determines that handover is required, a second command is obtained and a handover corresponding to the second command is triggered by sending a second message carrying the second command to the terminal, where the second command may include an L1 or L2 handover command triggered by the first device, and the terminal performs t handover corresponding to the second command according to the received second message. For simplicity, the L 1 or L2 handover being a handover corresponding to the second command is used as an example for description in the following embodiments.

When determining that a handover is required, the second device may send the first message carrying the first command to the first device, the first command includes at least one of the following:
an L3 handover command;
an inter-system handover command;
a secondary cell addition command;
a primary secondary cell addition or modification command; and
a redirection command.

A specific form of the first message may be varied, and for example, may be a UE context modification request (UE CONTEXT MODIFICATION REQUEST) message.

In an implementation, the first message carries at least one of the following:
a special cell identifier information element (Special Cell Identifier Information Element, SpCell ID IE);
a transmission action indicator information element (Transmission Action Indicator IE), where the transmission action indicator IE may be used to indicate whether to stop data transmission; and
a first information element (Information Element, IE), where the first IE is used to indicate that the first command is carried by the first message, and the first IE may use a synchronous reconfiguration with sync indicator IE (reconfiguration with sync indicator IE).

When determining that an interface message received from the second device includes the above information element, the first device may determine that the interface message is the first message carrying a first command or determine that the second device triggers a handover corresponding to the first command. For example, when it is determined that a Transmission Action Indicator IE carried by the received interface message indicates stopping data transmission or the first message carries the first IE, the first device may determine that the second device triggers the handover corresponding to the first command or determine that the interface message is the first message carrying the first command.

In an implementation, a value of a presence (Presence) column in the first IE is indicated as optional (optional).

S220: The first device determines, based on whether the terminal is executing a handover corresponding to the second command, whether to execute the first command or whether to send a third message to the terminal, where the second command includes an L1 or L2 handover command triggered by the first device, and the third message carries the first command.

When receiving the first message sent by the second device, the first device determines whether the terminal is currently performing a handover corresponding to the second command, that is, an L 1 or L2 handover. If it is determined that the terminal is executing the handover corresponding to the second command, for example, the first device has just sent a second message carrying the second command to the terminal, the first device does not execute the first command or send the third message to the terminal. If it is determined that the terminal is not performing the handover corresponding to the second command, the first device executes the first command or sends the third message to the terminal, so that the terminal performs the handover corresponding to the first command, such as an L3 handover. Executing the first command by the first device may specifically be sending the third message to the terminal based on the first command.

It can be seen from the technical solution of the above embodiment that in this embodiment of this application, the first device receives the first message from the second device, where the first message carries the first command. Based on whether the terminal is executing the handover corresponding to the second command, the first device determines whether to execute the first command or send the third message to the terminal. In this way, when the L1/2 handover and L3 handover are triggered simultaneously, it is clear how to execute the handover, so that the handover process can proceed smoothly.

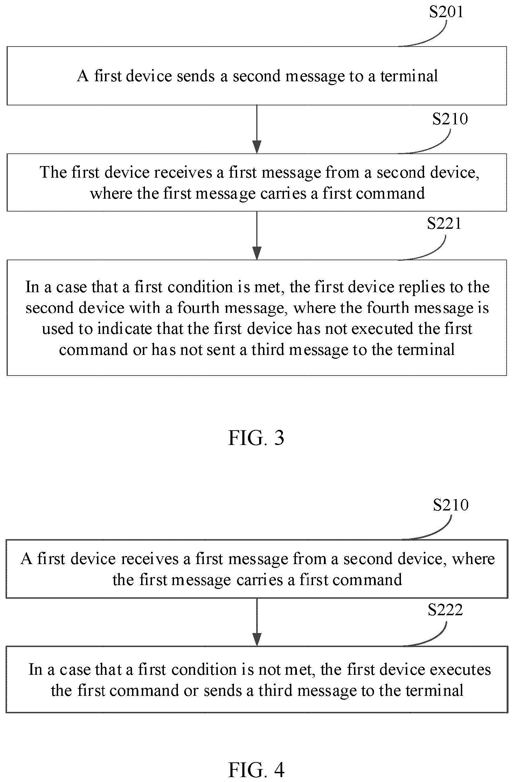

Based on the above embodiment, optionally, as shown in FIG. 3, step S220 includes:

S221: In a case that a first condition is met, the first device replies to the second device with a fourth message, where the fourth message is used to indicate that the first device has not executed the first command or has not sent the third message to the terminal; where
the first condition includes at least one of the following:
the first device has sent a second message to the terminal, and the second message carries the second command;
the first message is received within a first time period after the first device sends the second message to the terminal;
a first timer has not expired; where the first device does not execute the first command or send the third message before the first timer expires; and
execution of the handover corresponding to the second command has not been completed.

In an implementation, the method further includes, before step S210:

S201: The first device sends the second message to the terminal.

The first device triggers the handover corresponding to the second command by sending the second message to the terminal, and then receives the first message from the second device. Based on the second message already sent to the terminal or based on time of receiving the first message by the first device, the first device may reply to the second device with a fourth message, but does not execute the first command or send the third message carrying the first command to the terminal within a first time period after the second message is sent to the terminal.

A specific form of the fourth message may be varied, and for example, may be a UE context modification failure (UE CONTEXT MODIFICATION FAILURE) message.

In an implementation, the fourth message carries a first cause information element, and the first cause information element (Cause IE) carries a cause value indicating at least one of the following:
unspecified (Unspecified), for example, Unspecified in a cause value of radio network layer;
unspecified failure (Unspecified Failure), for example, Unspecified Failure in the miscellaneous cause value; and
a first cause value, where the first cause value is used for indicating that the handover corresponding to the second command has been triggered, which may, for example, be denoted as L1/2 handover triggered.

In another implementation, the first device first performs S201 of sending the second message to the terminal, and starts the first timer when sending the second message, and the first device does not execute the first command or send the third message to the terminal before the first timer expires, where the third message carries the first command.

The duration of the first timer may be set according to actual requirements, for example, may be predefined for the protocol. In an implementation, the duration of the first timer is configured by the second device, and may be specifically configured based on an interface message sent by the second device, such as a UE CONTEXT MODIFICATION REQUEST message.

Before the first timer expires, if the first device receives the first message sent by the second device, the first device may reply to the second device with a fourth message, but not executing the first command or sending a third message carrying the first command to the terminal, based on that the first device has sent the second message to the terminal, based on that the first message has been received within the first time period after the first device sent the second message to the terminal, or based on that the first timer has not expired.

In an implementation, the fourth message carries a first cause information element, and the first cause information element carries a cause value indicating at least one of the following:
unspecified;
unspecified failure;
a first cause value; and
a second cause value, where the second cause value is used for indicating that the first timer has not expired; where the first device does not execute the first command or send the third message carrying the first command to the terminal before the first timer expires.

Before the first timer expires, the first device may receive the first message sent by the second device for a plurality of times, and the first device may reply to the second device with the fourth message for a plurality of times.

In another implementation, if the first message is received from the second device again after the first timer expires, the first device may execute the first command or send the third message carrying the first command to the terminal, so as to make the terminal perform a handover corresponding to the first command.

In another implementation, if the second message is sent again to the terminal after the first timer expires, the first timer is started again.

In another implementation, the first device first performs S201 of sending the second message carrying the second command to the terminal, and then performs S210 of receiving the first message carrying the first command from the second device, the first device can determine, based on whether the handover corresponding to the second command has been completed, whether to execute the first command or whether to send the third message carrying the first command to the terminal. If it is determined that the handover corresponding to the second command is completed, the first device executes the first command or sends the third message to the terminal. If it is determined that the handover corresponding to the second command has not been completed, the first device does not execute the first command or send the third message to the terminal, but replies to the second device with the fourth message.

In an implementation, the fourth message carries a first cause information element, and the first cause information element carries a cause value indicating at least one of the following:
unspecified;
unspecified failure;
a first cause value; and
a second cause value.

The first device determines, by using a variety of judgment methods, whether the handover corresponding to the second command is completed. In an implementation, the completion of the handover corresponding to the second command is determined by using at least one of the following methods:
the terminal completes random access to a target cell, for example, the target cell has sent Message 2 (Msg2) or Message 4 (Msg4) to the terminal;
the target cell receives a hybrid automatic repeat request acknowledgement (Hybrid Automatic Repeat Request Acknowledgement, HARQ-ACK) for the second command sent by the terminal;
being within a third time period after the target cell receives the HARQ-ACK for the second command and sent by the terminal;
the source cell receives the HARQ-ACK for the second command and sent by the terminal; and
being within a fourth time period after the source cell receives the HARQ-ACK for the second command and sent by the terminal.

It can be seen from the technical solution of the above embodiment that in this embodiment of this application, the first device replies to the second device with the fourth message in a case that the first condition is met, and the fourth message is used to indicate that the first device has not executed the first command or has not sent the third message to the terminal. In this way, an L3 handover is not executed during an L1/2 handover process first performed, so that the handover process can proceed smoothly.

Based on the above embodiment, optionally, as shown in FIG. 4, step S220 further includes:
S222: In a case that a first condition is not met, the first device executes the first command or sends a third message to the terminal.

In an implementation, if the first device does not send the second message carrying a second command to the terminal before step S222, the first device executes the first command or sends the third message carrying the first command to the terminal.

In another implementation, if the first device has sent the second message carrying a second command to the terminal before step S222, then if time of receiving the first message by the first device is behind the first time period after the first device sends the second message to the terminal, or if the time of receiving the first message is after the first timer expires, or if the time of receiving the first message is after the handover corresponding to the second command is completed, the first device executes the first command or sends the third message carrying the first command to the terminal.

In an implementation, after the first device executes the first command or sends the third message to the terminal, in a case that a second condition is met, the first device skips sending the second message to the terminal, that is, not triggering the handover corresponding to the second command; where
the second condition includes at least one of the following:
the first device has executed the first command or sent the third message to the terminal;
the second command is obtained within a second time period after the first device executes the first command or sends the third message to the terminal;
a second timer has not expired; where the first device does not send the second message to the terminal before the second timer expires; and
execution of a handover corresponding to the first command has not been completed.

In an implementation, if the first device obtains a second command after executing the first command or sending the third message to the terminal, the first device may determine not to send the second message to the terminal, based on that the first command has been executed or the third message has been sent to the terminal, or based on that the second command has been obtained within a second time period after the first device executes the first command or sends the third message to the terminal.

In another implementation, the first device may not send the second message to the terminal based on that the handover corresponding to the first command has not been completed.

Determining whether the handover corresponding to the first command is completed may be performed in a same manner as determining whether the handover corresponding to the second command is completed: for example, including that the terminal completes random access to the target cell; or that the target cell receives the HARQ-ACK for the first command and sent by the terminal; or being within a preset time period after the target cell receives the HARQ-ACK for the first command and sent by the terminal; or that the source cell receives the HARQ-ACK for the first command and sent by the terminal; or being within a preset time period after the source cell receives the HARQ-ACK for the second command and sent by the terminal.

In another implementation, the method further includes, at time of executing the first command by the first device or sending the third message by the first device to the terminal:
starting, by the first device, a second timer and skipping, by the first device, sending the second message to the terminal before the second timer expires.

The duration of the second timer may be set according to actual requirements, for example, may be predefined for the protocol. In an implementation, the duration of the second timer is configured by the second device, and may be specifically configured based on an interface message sent by the second device, such as a UE CONTEXT MODIFICATION REQUEST message.

Before the second timer has been expired, the first device may not send the second message to the terminal; and after the second timer expires, the first device can send the second message to the terminal. In addition, when the first device executes the first command again or sends the third message to the terminal, the second timer is restarted.

It can be seen from the technical solution of the above embodiment that in this embodiment of this application, the first device executes the first command or the third message is sent to the terminal in a case that the first condition is not met. In this way, an L 1/2 handover is not triggered during an L3 handover process first performed, so that the handover process can proceed smoothly.

Based on the foregoing embodiment, optionally, the method further includes, after the step S201:
sending, by the first device, a fifth message to the second device, where the fifth message is used to indicate that the first device triggers the handover corresponding to the second command.

A specific form of the fifth message may be varied, and for example, may be a UE context modification requirement (UE CONTEXT MODIFICATION REQUIRE) message.

In an implementation, the fifth message may include a second IE, where the second IE carries information for indicating the first device to trigger a handover corresponding to the second command, which, for example, may be expressed as L1/2 handover initiation.

The second device may not send the first message to the first device after receiving the fifth message, or may not send the first message to the first device within a fifth time period after receiving the fifth message.

In an implementation, when receiving the fifth message, the second device may start a third timer and does not send the first message to the first device before the third timer expires. The duration of the third timer may be set according to actual requirements, for example, may be predefined for the protocol. In an implementation, the duration of the third timer is configured by the first device, and may be specifically configured based on an interface message sent by the first device.

In an implementation, the method further includes, after the first device sends the fifth message to the second device:
when it is determined that execution of the handover corresponding to the second command has been completed, the first device may send a sixth message to the second device, where the sixth message is used to indicate that execution of the handover corresponding to the second command has been completed. Specifically, the first device may send the sixth message to the second device in a case of determining that the first condition is not met.

In an implementation, the sixth message may include a third IE, where the third IE carries information for indicating completion of execution of the handover corresponding to the second command, which, for example, may be expressed as L1/2 handover complete.

In an implementation, after receiving the fifth message, the second device may not send the first message to the first device until the sixth message is received.

It should be understood that in the above embodiments, the first IE, the second IE, and the third IE may use different IEs, or use a same IE, or partially use a same IE to indicate different information by using different values (Value).

It can be seen from the technical solution of the above embodiment that in this embodiment of this application, the first device sends the fifth message to the second device after sending the second message to the terminal. In this way, an L3 handover is not triggered by the second device during an L1/2 handover process first performed, so that the handover process can proceed smoothly.

Based on the above embodiment, optionally, the method further includes, after the first device receives the first message from the second device:
in a case that content of the first command being absent in the first IE is determined, sending, by the first device, a seventh message to the second device to indicate that the first message does not carry the first command or a target cell is not prepared.

After receiving the interface message from the second device, the first device can determine, based on the information element contained in the interface message, that the interface message is the first message carrying the first command; however, the first message does not actually carry the content of the first command, that is, the content of the first command is not present in the first IE.

The content of the first command being not present in the first IE may specifically be that although the first IE is present in the interface message, the RRC message carrying the first command is not present, for example, the RRC-Container is not present.

In an implementation, the seventh message carries a second cause information element, and the second cause information element carries a cause value indicating at least one of the following:
unspecified;
unspecified failure;
call not available (Call Not Available), for example, Call Not Available in Radio Network Layer cause; and
a third cause value, where the third cause value is used to indicate that the first message does not carry the first command or the target cell is not prepared.

In another implementation, the first device may ignore the first message in a case of determining that the first command is not present in the first IE.

It can be seen from the technical solution of the above embodiment that in this embodiment of this application, the first device sends the seventh message to the second device in a case that the first command being absent in the first IE is determined, so as to avoid that the handover corresponding to the first command cannot be executed.

For the handover command triggering method provided in the embodiments of this application, the execution subject may be a handover command triggering apparatus. In the embodiments of this application, the handover command triggering apparatus provided in the embodiments of this application is described by using the handover command triggering method being executed by the handover command triggering apparatus as an example.

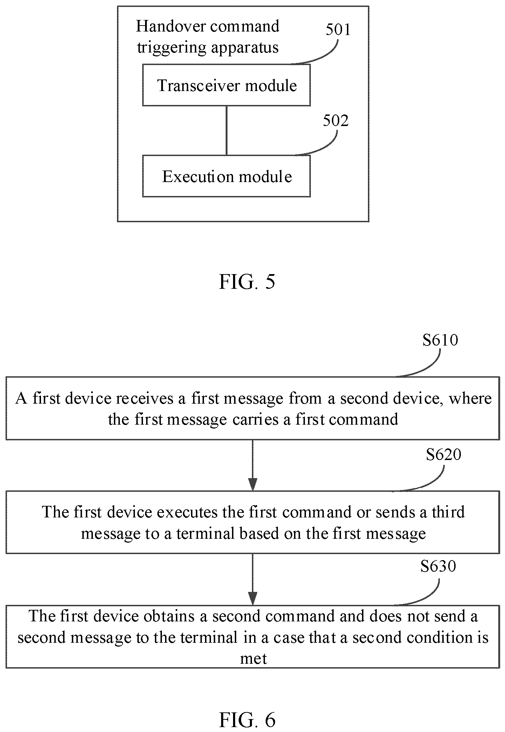

As shown in FIG. 5, the handover command triggering apparatus includes: a transceiver module 501 and an execution module 502.

The transceiver module 501 is configured to receive a first message from a second device, where the first message carries a first command; and the execution module 502 is configured to determine, based on whether a terminal is executing a handover corresponding to a second command, whether to execute the first command or whether to send a third message to the terminal.

The second command includes a layer 1 or layer 2 handover command triggered by the handover command triggering apparatus;
the third message carries the first command; and
the first command includes at least one of the following:
   a layer 3 handover command;
   an inter-system handover command;
   a secondary cell addition command;
   a primary secondary cell addition or modification command; and
   a redirection command.

Optionally, the first message carries at least one of the following:
a special cell identifier information element;
a transmission action indicator information element; and
a first information element, where the first information element is used to indicate that the first message carries the first command.

Optionally, a value of a presence column of the first information element is indicated as optional.

It can be seen from the technical solution of the above embodiment that in this embodiment of this application, the first device receives the first message from the second device, where the first message carries the first command. Based on whether the terminal is executing the handover corresponding to the second command, the first device determines whether to execute the first command or send the third message to the terminal. In this way, when the L1/2 handover and L3 handover are triggered simultaneously, it is clear how to execute the handover, so that the handover process can proceed smoothly.

Based on the above embodiment, optionally, the execution module 502 is configured to: in a case that a first condition is met, reply to the second device with a fourth message, where the fourth message is used to indicate that the first command has not been executed or the third message has not been sent to the terminal; where
the first condition includes at least one of the following:
a second message has been sent to the terminal, where the second message carries the second command;
the first message is received within a first time period after the second message is sent to the terminal;
a first timer has not expired; where the first command is not executed or the third message is not sent before the first timer expires; and
execution of the handover corresponding to the second command has not been completed.

Optionally, the fourth message carries a first cause information element, and the first cause information element carries a cause value indicating at least one of the following:
unspecified;
unspecified failure;
a first cause value, where the first cause value is used for indicating that the handover corresponding to the second command has been triggered; and
a second cause value, where the second cause value is used for indicating that the first timer has not expired; where the first command is not executed or the third message carrying the first command is not sent to the terminal before the first timer expires.

Optionally, the transceiver module 501 is further configured to send the second message to the terminal.

Optionally, the execution module 502 is further configured to, when the second message is being sent to the terminal, start the first timer and skip executing the first command or sending the third message to the terminal before the first timer expires.

Optionally, execution of the handover corresponding to the second command being completed is determined in at least one of the following manners:
the terminal has completed random access to a target cell;
the target cell receives a hybrid automatic repeat request acknowledgement for the second command and sent by the terminal;
being within a third time period after the target cell receives the hybrid automatic repeat request acknowledgement for the second command and sent by the terminal;
the source cell receives the hybrid automatic repeat request acknowledgement for the second command and sent by the terminal; and
being within a fourth time period after the source cell receives the hybrid automatic repeat request acknowledgement for the second command and sent by the terminal.

Optionally, duration of the first timer is configured by the second device.

It can be seen from the technical solution of the above embodiment that in this embodiment of this application, the fourth message is replied to the second device in a case that the first condition is met, and the fourth message is used to indicate that the first command has not been executed or the third message has not been sent to the terminal. In this way, an L3 handover is not executed during an L1/2 handover process first performed, so that the handover process can proceed smoothly.

Based on the above embodiment, optionally, the execution module 502 is further configured to execute the first command or send the third message to the terminal in a case that the first condition is not met.

Optionally, the execution module 502 is further configured to: for the first device, skip sending the second message to the terminal in a case that a second condition is met; where
the second condition includes at least one of the following:
the first device has executed the first command or sent the third message to the terminal;
the second command is obtained within a second time period after the first device executes the first command or sends the third message to the terminal;
a second timer has not expired; where the first device does not send the second message to the terminal before the second timer expires; and
execution of a handover corresponding to the first command has not been completed.

Optionally, the execution module 502 is further configured to start a second timer and skip sending the second message to the terminal before the second timer expires.

Optionally, duration of the second timer is configured by the second device.

It can be seen from the technical solution of the above embodiment that in this embodiment of this application, the first command is executed or the third message is sent to the terminal in a case that the first condition is not met. In this way, an L1/2 handover is not triggered during an L3 handover process first performed, so that the handover process can proceed smoothly.

Based on the above embodiment, optionally, after sending the second message to the terminal, the transceiver module 501 is further configured to send a fifth message to the second device, where the fifth message is used to indicate that the handover corresponding to the second command is triggered.

Optionally, the fifth message includes a second information element, and the second information element carries information for indicating that the handover corresponding to the second command is triggered.

Optionally, the transceiver module is further configured to, when it is determined that execution of the handover corresponding to the second command has been completed, send a sixth message to the second device, where the sixth message is used to indicate that execution of the handover corresponding to the second command has been completed.

Optionally, the sixth message includes a third information element, and the third information element carries information for indicating that execution of the handover corresponding to the second command has been completed.

It can be seen from the technical solution of the above embodiment that in this embodiment of this application, the fifth message is sent to the second device after the second message is sent to the terminal. In this way, an L3 handover is not triggered by the second device during an L1/2 handover process first performed, so that the handover process can proceed smoothly.

Based on the above embodiment, optionally, the transceiver module 501 is further configured to: in a case that content of the first command being absent in the first information element is determined, send a seventh message to the second device to indicate that the first message does not carry the first command or a target cell is not prepared.

Optionally, the seventh message carries a second cause information element, and the second cause information element carries a cause value indicating at least one of the following:
unspecified;
unspecified failure;
call not available; and
a third cause value, where the third cause value is used to indicate that the first message does not carry the first command or the target cell is not prepared.

It can be seen from the technical solution of the above embodiment that in this embodiment of this application, the seventh message is sent to the second device in a case that the first command being absent in the first IE is determined, so as to avoid that the handover corresponding to the first command cannot be executed.

The handover command triggering apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The handover command triggering apparatus provided in this embodiment of this application is capable of implementing the processes implemented in the method embodiment in FIG. 2 to FIG. 4, with the same technical effects achieved. To avoid repetition, details are not described herein again.

As shown in FIG. 6, an embodiment of this application provides a handover command triggering method, and an execution subject of the method is a first device. The first device may be an access network device, in other words, the method can be executed by software or hardware installed in the first device. The method includes the following steps:

S610: The first device receives a first message from a second device, where the first message carries a first command.

S620: The first device executes the first command or sends a third message to the terminal based on the first message.

S630: The first device obtains a second command and does not send a second message to the terminal in a case that a second condition is met.

The second message carries the second command, and the second command includes a layer 1 or layer 2 handover command triggered by the first device.

The third message carries the first command, and the first command includes at least one of the following:
a layer 3 handover command;
an inter-system handover command;
a secondary cell addition command;
a primary secondary cell addition or modification command; and
a redirection command.

In an implementation, the second condition includes at least one of the following:
the first device has executed the first command or sent the third message to the terminal;
the second command is obtained within a second time period after the first device executes the first command or sends the third message to the terminal;
a second timer has expired; and
execution of a handover corresponding to the first command has not been completed.

In an implementation, if the first device obtains a second command after executing the first command or sending the third message to the terminal, the first device may determine not to send the second message to the terminal, based on that the first command has been executed or the third message has been sent to the terminal, or based on that the second command has been obtained within a second time period after the first device executes the first command or sends the third message to the terminal.

In another implementation, the first device may not send the second message to the terminal based on that the handover corresponding to the first command has not been completed.

Determining whether the handover corresponding to the first command is completed may be performed in a same manner as determining whether the handover corresponding to the second command is completed: for example, including that the terminal completes random access to the target cell; or that the target cell receives the HARQ-ACK for the first command and sent by the terminal; or being within a preset time period after the target cell receives the HARQ-ACK for the first command and sent by the terminal; or that the source cell receives the HARQ-ACK for the first command and sent by the terminal; or being within a preset time period after the source cell receives the HARQ-ACK for the second command and sent by the terminal.

In an implementation, when step S620 is executed, the first device starts a second timer, and the first device does not send the second message to the terminal before the second timer expires.

The duration of the second timer may be set according to actual requirements, for example, may be predefined for the protocol. In an implementation, the duration of the second timer is configured by the second device, and may be specifically configured based on an interface message sent by the second device.

Before the second timer has been expired, the first device may not send the second message to the terminal; and after the second timer expires, the first device can send the second message to the terminal. In addition, when the first device executes the first command again or sends the third message to the terminal, the second timer is restarted.

In another implementation, after the first device obtains the second command, the first device sends the second message to the terminal in a case that a second condition is met.

It can be seen from the technical solution of the above embodiment that in this embodiment of this application, the first message is received from the second device and the first command is executed or the third message is sent to the terminal; and then the second command is obtained and the second message is not sent to the terminal in a case that the second condition is met. In this way, an L3 handover is not executed during an L1/2 handover process first performed, so that the handover process can proceed smoothly.

For the handover command triggering method provided in the embodiments of this application, the execution subject may be a handover command triggering apparatus. In the embodiments of this application, the handover command triggering apparatus provided in the embodiments of this application is described by using the handover command triggering method being executed by the handover command triggering apparatus as an example.

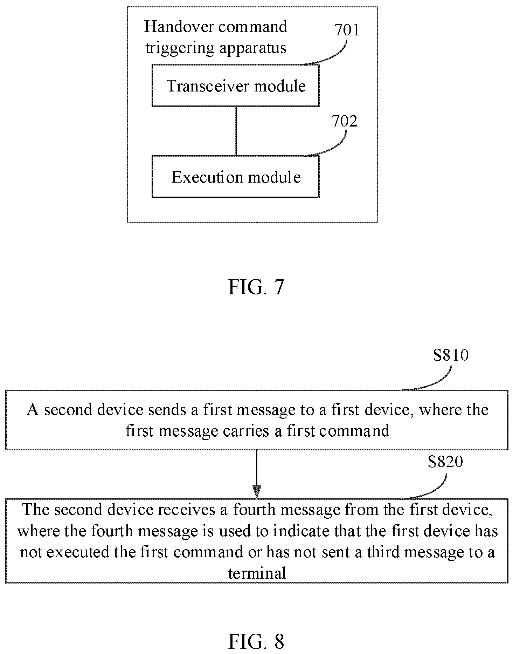

As shown in FIG. 7, the handover command triggering apparatus includes: a transceiver module 701 and an execution module 702.

The transceiver module 701 is configured to receive a first message from a second device, where the first message carries a first command; and the execution module 702 is configured to execute the first command or send a third message to the terminal based on the first message. The execution module 702 is further configured to obtain a second command, and skip sending a second message to the terminal in a case that a second condition is met.

The second message carries the second command, and the second command includes a layer 1 or layer 2 handover command triggered by the first device; and
the third message carries the first command, and the first command includes at least one of the following:
a layer 3 handover command;
an inter-system handover command;
a secondary cell addition command;
a primary secondary cell addition or modification command; and
a redirection command.

Optionally, the second condition includes at least one of the following:
the first command has been executed or the third message has been sent to the terminal;
the second command is obtained within a second time period after the first command has been executed or the third message has been sent to the terminal;
a second timer has expired; and
execution of a handover corresponding to the first command has not been completed.

Optionally, the execution module 702 is further configured to start a second timer and skip sending the second message to the terminal before the second timer expires.

Optionally, the execution module 702 is further configured to: send the second message to the terminal in a case that the second condition is not met.

It can be seen from the technical solution of the above embodiment that in this embodiment of this application, the first message is received from the second device and the first command is executed or the third message is sent to the terminal; and then the second command is obtained and the second message is not sent to the terminal in a case that the second condition is met. In this way, an L3 handover is not executed during an L1/2 handover process first performed, so that the handover process can proceed smoothly.

The handover command triggering apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The handover command triggering apparatus provided in this embodiment of this application is capable of implementing the processes implemented in the method embodiment in FIG. 6, with the same technical effects achieved. To avoid repetition, details are not described herein again.

As shown in FIG. 8, an embodiment of this application further provides a handover command triggering method, and an execution subject of the method is a second device. The second device may be an access network device, in other words, the method can be executed by software or hardware installed in the second device. The method includes the following steps:

S810: The second device sends a first message to the first device, where the first message carries a first command.

S820: The second device receives a fourth message from the first device, where the fourth message is used to indicate that the first device has not executed the first command or has not sent the third message to the terminal.

The third message carries the first command; and
the first command includes at least one of the following:
a layer 3 handover command;
an inter-system handover command;
a secondary cell addition command;
a primary secondary cell addition or modification command; and
a redirection command.

Optionally, the first message carries at least one of the following:
a special cell identifier information element;
a transmission action indicator information element; and
a first information element, where the first information element is used to indicate that the first message carries the first command.

Optionally, the fourth message carries a first cause information element, and the first cause information element carries a cause value indicating at least one of the following:
unspecified;
unspecified failure;
a first cause value, where the first cause value is used to indicate that a handover corresponding to a second command has been triggered, and the second command includes a layer 1 or layer 2 handover command triggered by the first device; and
a second cause value, where the second cause value is used for indicating that a first timer has not expired; where the first device does not execute the first command or send the third message carrying the first command to the terminal before the first timer expires.

Steps S810-S820 can implement the method embodiment shown in FIG. 3, with the same technical effects achieved, and the repeated parts are not repeated herein.

It can be seen from the technical solution of the above embodiment that in this embodiment of this application, the first message is sent to the first device and then the fourth message is received from the first device, where the fourth message is used to indicate that the first device has not executed the first command or has not sent the third message to the terminal. In this way, an L3 handover is not executed during an L1/2 handover process first performed, so that the handover process can proceed smoothly.

Based on the foregoing embodiment, optionally, the method further includes, after the step S 810:
receiving, by the second device, a fifth message from the first device, where the fifth message is used to indicate that the first device triggers a handover corresponding to a second command.

Optionally, the fifth message includes a second information element, and the second information element carries information for indicating that the first device triggers the handover corresponding to the second command.

Optionally, the method further includes, after the receiving, by the second device, a fifth message from the first device:
receiving, by the second device, a sixth message from the first device, where the sixth message is used to indicate that execution of the handover corresponding to the second command has been completed.

Optionally, the sixth message includes a third information element, and the third information element carries information for indicating that execution of the handover corresponding to the second command has been completed.

Optionally, the method further includes, at time of receiving the fifth message from the first device by the second device:
starting a third timer; where the second device does not send the first message to the first device before the third timer expires.

This embodiment of this application can implement the method embodiment shown in FIG. 4, with the same technical effects achieved, and the repeated parts are not repeated herein.

It can be seen from the technical solution of the above embodiment that in this embodiment of this application, the fifth message is received from the first device, and the fifth message is used to indicate that the first device triggers the handover corresponding to the second command. In this way, an L3 handover is not triggered by the second device during an L 1/2 handover process first performed, so that the handover process can proceed smoothly.

Based on the foregoing embodiment, optionally, the method further includes, after the step S 810:
receiving, by the second device, a seventh message from the first device, where the seventh message is used to indicate that the first message does not carry the first command or a target cell is not prepared.

Optionally, the seventh message carries a second cause information element, and the second cause information element carries a cause value indicating at least one of the following:
unspecified;
unspecified failure;
call not available; and
a third cause value, where the third cause value is used to indicate that the first message does not carry the first command or the target cell is not prepared.

It can be seen from the technical solution of the above embodiment that in this embodiment of this application, the seventh message is received from the first device, and the seventh message is used to indicate that the first message does not carry the first command or the target cell is not prepared, thus avoiding that the handover corresponding to the first command cannot be performed.

For the handover command triggering method provided in the embodiments of this application, the execution subject may be a handover command triggering apparatus. In the embodiments of this application, the handover command triggering apparatus provided in the embodiments of this application is described by using the handover command triggering method being executed by the handover command triggering apparatus as an example.

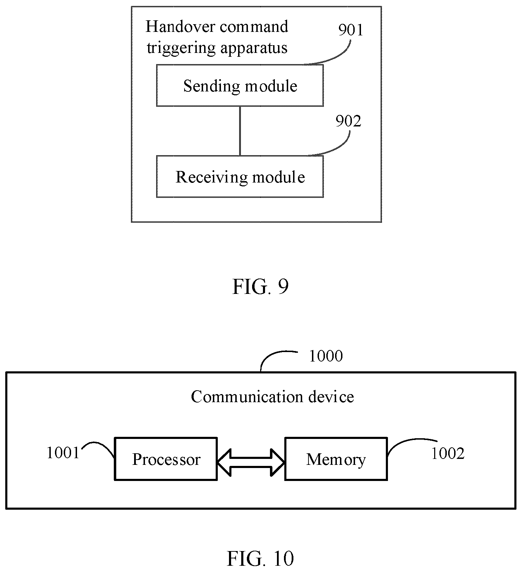

As shown in FIG. 9, the handover command triggering apparatus includes: a sending module 901 and a receiving module 902.

The sending module 901 is configured to send a first message to the first device, where the first message carries a first command; and the receiving module 902 is configured to receive a fourth message from the first device, where the fourth message is used to indicate that the first device has not executed the first command or has not sent the third message to the terminal; where
the third message carries the first command; and
the first command includes at least one of the following:
   a layer 3 handover command;
   an inter-system handover command;
   a secondary cell addition command;
   a primary secondary cell addition or modification command; and
   a redirection command.

Optionally, the first message carries at least one of the following:
a special cell identifier information element;
a transmission action indicator information element; and
a first information element, where the first information element is used to indicate that the first message carries the first command.

Optionally, the fourth message carries a first cause information element, and the first cause information element carries a cause value indicating at least one of the following:
unspecified;
unspecified failure;
a first cause value, where the first cause value is used to indicate that a handover corresponding to a second command has been triggered, and the second command includes a layer 1 or layer 2 handover command triggered by the first device; and
a second cause value, where the second cause value is used for indicating that a first timer has not expired; where the first device does not execute the first command or send the third message carrying the first command to the terminal before the first timer expires.

It can be seen from the technical solution of the above embodiment that in this embodiment of this application, the first message is sent to the first device and then the fourth message is received from the first device, where the fourth message is used to indicate that the first device has not executed the first command or has not sent the third message to the terminal. In this way, an L3 handover is not executed during an L1/2 handover process first performed, so that the handover process can proceed smoothly.

Based on the above embodiment, optionally, the receiving module 902 is further configured to receive a fifth message from the first device, where the fifth message is used to indicate that the first device triggers a handover corresponding to a second command.

Optionally, the fifth message includes a second information element, and the second information element carries information for indicating that the first device triggers the handover corresponding to the second command.

Optionally, the receiving module 902 is further configured to receive a sixth message from the first device, where the sixth message is used to indicate that execution of the handover corresponding to the second command has been completed.

Optionally, the sixth message includes a third information element, and the third information element carries information for indicating that execution of the handover corresponding to the second command has been completed.

Optionally, the receiving module 902 is further configured to start a third timer; where the first message is not sent to the first device before the third timer expires.

It can be seen from the technical solution of the above embodiment that in this embodiment of this application, the fifth message is received from the first device, and the fifth message is used to indicate that the first device triggers the handover corresponding to the second command. In this way, an L3 handover is not triggered during an L1/2 handover process first performed, so that the handover process can proceed smoothly.

Based on the above embodiment, optionally, the receiving module 902 is further configured to receive a seventh message from the first device, where the seventh message is used to indicate that the first message does not carry the first command or a target cell is not prepared.

Optionally, the seventh message carries a second cause information element, and the second cause information element carries a cause value indicating at least one of the following:
unspecified;
unspecified failure;
call not available; and
a third cause value, where the third cause value is used to indicate that the first message does not carry the first command or the target cell is not prepared.

It can be seen from the technical solution of the above embodiment that in this embodiment of this application, the seventh message is received from the first device, and the seventh message is used to indicate that the first message does not carry the first command or the target cell is not prepared, thus avoiding that the handover corresponding to the first command cannot be performed.

The handover command triggering apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The handover command triggering apparatus provided in this embodiment of this application is capable of implementing the processes implemented in the method embodiment in FIG. 8, with the same technical effects achieved. To avoid repetition, details are not described herein again.

Optionally, as shown in FIG. 10, an embodiment of this application further provides a communication device 1000, including a processor 1001 and a memory 1002, and a program or instruction executable by the processor 1001 is stored in the memory 1002. For example, when the communication device 1000 is a terminal and when the program or instruction is executed by the processor 1001, the steps of the foregoing embodiments of the handover command triggering method are implemented, with the same technical effects achieved. When the communication device 1000 is a network-side device and when the program or instruction is executed by the processor 1001, the steps of the foregoing embodiments of the handover command triggering method are implemented, with the same technical effects achieved. To avoid repetition, details are not described herein again.

An embodiment of this application further provides a network-side device, including a processor and a communication interface, where the processor is configured to: based on whether a terminal is executing a handover corresponding to a second command, determine whether to execute a first command or send a third message to the terminal, and the communication interface is configured to receive the first message from a second device. The network-side device embodiments correspond to the foregoing method embodiments of the first device side, and the implementation processes and implementations of the foregoing method embodiments can be applied to the network-side device embodiments, with the same technical effects achieved.

An embodiment of this application further provides another network-side device, including a processor and a communication interface, where the processor is configured to: execute a first command or send a third message to the terminal based on a first message, and skip sending a second message to the terminal in a case that a second condition is met; and the communication interface is configured to receive a first message from a second device to obtain a second command. The network-side device embodiments correspond to the foregoing method embodiments of the first device side, and the implementation processes and implementations of the foregoing method embodiments can be applied to the network-side device embodiments, with the same technical effects achieved.

An embodiment of this application further provides another network-side device, including a communication interface, where the communication interface is configured to send a first message to the first device and receive a fourth message from the first device, where the fourth message is used to indicate that the first device has not executed a first command or has not sent a third message to a terminal. The network-side device embodiments correspond to the foregoing method embodiments of the second device side, and the implementation processes and implementations of the foregoing method embodiments can be applied to the network-side device embodiments, with the same technical effects achieved.

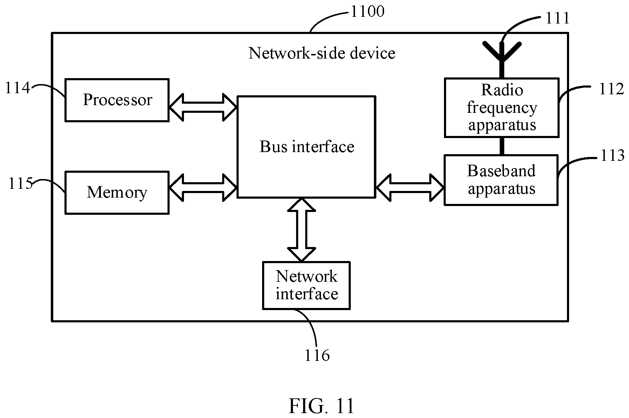

Specifically, an embodiment of this application further provides a network-side device. As shown in FIG. 11, the network-side device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out by using the antenna 111.

The method executed by the network-side device in the foregoing embodiments can be implemented in the baseband apparatus 113, and the baseband apparatus 113 includes a baseband processor.

The baseband apparatus 113 may include, for example, at least one baseband board, where a plurality of chips are disposed on the baseband board. As shown in FIG. 11, one of the chips is, for example, a baseband processor, and is connected to the memory 115 through the bus interface, to invoke a program in the memory 115 to perform the operations of the network device shown in the foregoing method embodiments.

The network-side device may further include a network interface 116, where the interface is, for example, a common public radio interface (common public radio interface, CPRI).

Specifically, the network-side device 1100 in this embodiment of the present invention further includes: an instruction or program stored in the memory 115 and executable by the processor 114. The processor 114 invokes the instruction or program in the memory 115 to execute the method executed by the modules shown in FIG. 5, FIG. 7, or FIG. 9, with the same technical effects achieved. To avoid repetition, details are not repeated herein.

An embodiment of this application further provides a readable storage medium, where a program or an instruction is stored in the readable storage medium. When the program or instruction is executed by a processor, the processes of the foregoing embodiment of the handover command triggering method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiments of the handover command triggering method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the handover command triggering method, with the same technical effects achieved. To avoid repetition, details are not repeated herein.

An embodiment of this application further provides a handover command triggering system, including a terminal and a network-side device, where the terminal can be configured to execute the steps of the foregoing embodiments of the handover command triggering method, and the network-side device can be configured to execute the steps of the foregoing embodiments of the handover command triggering method.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A handover command triggering method, comprising:
receiving, by a first device, a first message from a second device, wherein the first message carries a first command; and
determining, by the first device based on whether a terminal is executing a handover corresponding to a second command, whether to execute the first command or whether to send a third message to the terminal, wherein
the second command comprises a layer 1 or layer 2 handover command triggered by the first device;
the third message carries the first command; and
the first command comprises at least one of the following:
a layer 3 handover command,
an inter-system handover command,
a secondary cell addition command,
a primary secondary cell addition or modification command, and
a redirection command.

2. The method according to claim 1, wherein the determining, by the first device based on whether a terminal is executing a handover corresponding to a second command, whether to execute the first command or whether to send a third message to the terminal comprises:
in a case that a first condition is met, replying, by the first device, to the second device with a fourth message, wherein the fourth message is used to indicate that the first device has not executed the first command or has not sent the third message to the terminal; and
the first condition comprises at least one of the following:
the first device has sent a second message to the terminal, wherein the second message carries the second command;
the first message is received within a first time period after the first device sends the second message to the terminal;
a first timer has not expired, wherein the first device does not execute the first command or send the third message before the first timer expires; and
execution of the handover corresponding to the second command has not been completed.

3. The method according to claim 2, wherein the fourth message carries a first cause information element, and the first cause information element carries a cause value indicating at least one of the following:
unspecified;
unspecified failure;
a first cause value, wherein the first cause value is used for indicating that the handover corresponding to the second command has been triggered; and
a second cause value, wherein the second cause value is used for indicating that the first timer has not expired, and the first device does not execute the first command or send the third message carrying the first command to the terminal before the first timer expires.

4. The method according to claim 2, wherein execution of the handover corresponding to the second command being completed is determined in at least one of the following manners:
the terminal has completed random access to a target cell;
the target cell receives a hybrid automatic repeat request acknowledgement for the second command and sent by the terminal;
being within a third time period after the target cell receives the hybrid automatic repeat request acknowledgement for the second command and sent by the terminal;
the source cell receives the hybrid automatic repeat request acknowledgement for the second command and sent by the terminal; and
being within a fourth time period after the source cell receives the hybrid automatic repeat request acknowledgement for the second command and sent by the terminal.

5. The method according to claim 2, wherein the determining, by the first device based on whether a terminal is executing a handover related to a second command, whether to execute the first command or whether to send a third message to the terminal further comprises:
in a case that a first condition is not met, executing, by the first device, the first command or sending, by the first device, the third message to the terminal.

6. The method according to claim 5, further comprising, after the executing, by the first device, the first command or sending, by the fist device, the third message to the terminal:
in a case that a second condition is met, skipping, by the first device, sending the second message to the terminal, wherein
the second condition comprises at least one of the following:
the first device has executed the first command or sent the third message to the terminal;
the second command is obtained within a second time period after the first device executes the first command or sends the third message to the terminal;
a second timer has not expired, wherein the first device does not send the second message to the terminal before the second timer expires; and
execution of a handover corresponding to the first command has not been completed.

7. The method according to claim 5, further comprising, at time of executing the first command by the first device or sending the third message by the first device to the terminal:
starting, by the first device, a second timer and skipping, by the first device, sending the second message to the terminal before the second timer expires.

8. The method according to claim 2 or 5, further comprising: before the receiving, by a first device, a first message from a second device:
sending, by the first device, the second message to the terminal.

9. The method according to claim 8, further comprising, at time of the sending, by the first device, the second message to the terminal:
starting the first timer, and skipping, by the first device, executing the first command or sending the third message to the terminal before the first timer expires.

10. The method according to claim 8, further comprising, after the sending, by the first device, the second message to the terminal:
sending, by the first device, a fifth message to the second device, wherein the fifth message is used to indicate that the first device triggers the handover corresponding to the second command.

11. The method according to claim 10, wherein the fifth message comprises a second information element, and the second information element carries information for indicating that the first device triggers the handover corresponding to the second command.

12. The method according to claim 10, further comprising, after the sending, by the first device, a fifth message to the second device:
when it is determined that execution of the handover corresponding to the second command has been completed, sending, by the first device, a sixth message to the second device, wherein the sixth message is used to indicate that execution of the handover corresponding to the second command has been completed.

13. The method according to claim 12, wherein the sixth message comprises a third information element, and the third information element carries information for indicating that execution of the handover corresponding to the second command has been completed.

14. The method according to claim 1, further comprising, after the receiving, by a first device, a first message from a second device:
in a case that content of the first command being absent in the first information element is determined, sending, by the first device, a seventh message to the second device to indicate that the first message does not carry the first command or a target cell is not prepared.

15. The method according to claim 14, wherein the seventh message carries a second cause information element, and the second cause information element carries a cause value indicating at least one of the following:
unspecified;
unspecified failure;
call not available; and
a third cause value, wherein the third cause value is used to indicate that the first message does not carry the first command or the target cell is not prepared.

16. The method according to claim 1, wherein the first message carries at least one of the following:
a special cell identifier information element;
a transmission action indicator information element; and
a first information element, wherein the first information element is used to indicate that the first message carries the first command.

17. A handover command triggering apparatus, comprising:
a transceiver module, configured to receive a first message from a second device, wherein the first message carries a first command; and
an execution module, configured to determine, based on whether a terminal is executing a handover corresponding to a second command, whether to execute the first command or whether to send a third message to the terminal, wherein
the second command comprises a layer 1 or layer 2 handover command triggered by the handover command triggering apparatus;
the third message carries the first command; and
the first command comprises at least one of the following:
a layer 3 handover command;
an inter-system handover command;
a secondary cell addition command;
a primary secondary cell addition or modification command; and
a redirection command.

18. A handover command triggering method, comprising:
receiving, by a first device, a first message from a second device, wherein the first message carries a first command;
executing, by the first device, the first command or sending, by the first device, a third message to the terminal, based on the first message; and
obtaining, by the first device, a second command, and skipping, by the first device, sending a second message to the terminal in a case that a second condition is met, wherein
the second message carries the second command, and the second command comprises a layer 1 or layer 2 handover command triggered by the first device; and
the third message carries the first command, and the first command comprises at least one of the following:
a layer 3 handover command;
an inter-system handover command;
a secondary cell addition command;
a primary secondary cell addition or modification command; and
a redirection command.

19. The method according to claim 18, wherein the second condition comprises at least one of the following:
the first device has executed the first command or sent the third message to the terminal;
the second command is obtained within a second time period after the first device executes the first command or sends the third message to the terminal;
a second timer has expired; and
execution of a handover corresponding to the first command has not been completed.

20. The method according to claim 18, further comprising, at time of executing the first command by the first device or sending the third message by the first device to the terminal:
starting, by the first device, a second timer and skipping, by the first device, sending the second message to the terminal before the second timer expires.

21. The method according to claim 18, further comprising, after the obtaining, by the first device, a second command:
in a case that a second condition is met, sending, by the first device, the second message to the terminal.

22. A handover command triggering apparatus, comprising:
a transceiver module, configured to receive a first message from a second device, wherein the first message carries a first command; and
an execution module, configured to execute the first command or send a third message to the terminal based on the first message; wherein
the execution module is further configured to obtain a second command, and skip sending a second message to the terminal in a case that a second condition is met;
the second message carries the second command, and the second command comprises a layer 1 or layer 2 handover command triggered by the first device; and
the third message carries the first command, and the first command comprises at least one of the following:
a layer 3 handover command;
an inter-system handover command;
a secondary cell addition command;
a primary secondary cell addition or modification command; and
a redirection command.

23. A handover command triggering method, comprising:
sending, by a second device, a first message to the first device, wherein the first message carries a first command; and
receiving, by the second device, a fourth message from the first device, wherein the fourth message is used to indicate that the first device has not executed the first command or has not sent the third message to the terminal, wherein
the third message carries the first command; and
the first command comprises at least one of the following:
a layer 3 handover command;
an inter-system handover command;
a secondary cell addition command;
a primary secondary cell addition or modification command; and
a redirection command.

24. The method according to claim 23, wherein the first message carries at least one of the following:
a special cell identifier information element;
a transmission action indicator information element; and
a first information element, wherein the first information element is used to indicate that the first message carries the first command.

25. The method according to claim 23, wherein the fourth message carries a first cause information element, and the first cause information element carries a cause value indicating at least one of the following:
unspecified;
unspecified failure;
a first cause value, wherein the first cause value is used to indicate that a handover corresponding to a second command has been triggered, and the second command comprises a layer 1 or layer 2 handover command triggered by the first device; and
a second cause value, wherein the second cause value is used for indicating that a first timer has not expired, and the first device does not execute the first command or send the third message carrying the first command to the terminal before the first timer expires.

26. The method according to claim 23, further comprising, after the sending, by a second device, a first message to a first device:
receiving, by the second device, a fifth message from the first device, wherein the fifth message is used to indicate that the first device triggers a handover corresponding to a second command.

27. The method according to claim 26, wherein the fifth message comprises a second information element, and the second information element carries information for indicating that the first device triggers the handover corresponding to the second command.

28. The method according to claim 26, further comprising, after the receiving, by the second device, a fifth message from the first device:
receiving, by the second device, a sixth message from the first device, wherein the sixth message is used to indicate that execution of the handover corresponding to the second command has been completed.

29. The method according to claim 28, wherein the sixth message comprises a third information element, and the third information element carries information for indicating that execution of the handover corresponding to the second command has been completed.

30. The method according to claim 26, further comprising, at time of receiving the fifth message from the first device by the second device:
starting a third timer, wherein the second device does not send the first message to the first device before the third timer expires.

31. The method according to claim 23, further comprising, after the sending, by a second device, a first message to a first device:
receiving, by the second device, a seventh message from the first device, wherein the seventh message is used to indicate that the first message does not carry the first command or a target cell is not prepared.

32. The method according to claim 31, wherein the seventh message carries a second cause information element, and the second cause information element carries a cause value indicating at least one of the following:
unspecified;
unspecified failure;
call not available; and
a third cause value, wherein the third cause value is used to indicate that the first message does not carry the first command or the target cell is not prepared.

33. A handover command triggering apparatus, comprising:
a sending module, configured to send a first message to the first device, wherein the first message carries a first command; and
a receiving module, configured to receive a fourth message from the first device, wherein the fourth message is used to indicate that the first device has not executed the first command or has not sent the third message to the terminal; wherein
the third message carries the first command; and
the first command comprises at least one of the following:
a layer 3 handover command;
an inter-system handover command;
a secondary cell addition command;
a primary secondary cell addition or modification command; and
a redirection command.

34. A network-side device, comprising a processor and a memory, wherein a program or instruction executable by the processor is stored in the memory, and when the program or instruction is executed by the processor, the handover command triggering method according to any one of claims 1 to 16 is implemented, or the handover command triggering method according to any one of claims 18 to 21 is implemented, or the handover command triggering method according to any one of claims 23 to 32 is implemented.

35. A readable storage medium, wherein the readable storage medium stores a program or an instruction, and when the program or instruction is executed by a processor, the handover command triggering method according to any one of claims 1 to 16 is implemented, or the handover command triggering method according to any one of claims 18 to 21 is implemented, or the handover command triggering method according to any one of claims 23 to 32 is implemented.
